# EUROPEAN PATENT APPLICATION

(11) **EP 0 778 689 A1**
(43) Date of publication of application: **11.06.1997**
(21) Application number: 95308855.6
(22) Date of filing: 06.12.1995
(51) Int. Cl.: H04M 1/00, G06K 11/18, G05G 9/047

(54) **Telecommunication end user device**

(71) Applicant: WILHELM, Siegfried E, 81373 München (DE); Maxon Systems Inc. Ltd., Salford Redhill, Surrey RH1 5JP (GB)
(72) Inventor: Patel, Chris, London SE7 7LR (GB); Wilhelm, Siegfried E., 81373 München (DE)
(74) Representative: Schmidt, Steffen J., Dipl.-Ing.

(57) **Abstract**

Telecommunications end user device (10) comprises a voice input device (18) and a voice output device (20); a processing and interface device (22) adapted to be connected to a telecommunications network, connected to said voice input device (18) to receive voice signals from said voice input device (18) and to send output signals representative for said voice signals to said telecommunications network, and connected to said voice output device (20) to output voice signals representative for input signals from said telecommunications network; a keypad device (24) to input electrical signals representative for alphanumerical data into said processing and interface device (22), said processing and interface device (22) being adapted to convert said electrical signals into tone signals having frequencies representative for the alphanumerical values, respectively, and wherein an input device (26) for user commands to be entered into the telecommunications end user device (10) to transmitted through said telecommunications network is provided.

## Description

The present invention relates to a telecommunications end user device such as a telephone apparatus.

The demand and the market of television game shows, television shopping and other activities offered by television broadcasting stations in cooperation with sales organizations for services and products is rapidly growing. In one type of television game shows a person watching a television game show is at the same time connected to the television broadcasting station via a telephone network and a telephone apparatus. The person participating in the game communicates with the broadcasting station by user commands that generated in the telephone apparatus and sent through the telephone network to the television broadcasting station. Typically, these user commands are tone signals caused by an electronical processing and interface device in the telephone apparatus depending on the keys depressed on the telephone keypad. Such tone signals are standardized and referred to as dual tone multifrequency signals (DTMF signals).

One of the main problems encountered by a person participating in a television game show during the use of a conventional telephone apparatus for the participation in and the control of such a television game by depressing keys of the keypad of the telephone apparatus is the relatively poor user friendliness of such keypads with respect to a safe and fast operability. This lack of user friendliness is often times a very limiting factor with respect to the possible speed and complexity of the television games and with respect to the chances of the user to successfully participate in such a television game. Most of these television games are commercially sponsored and the prices that can be won when successfully participating in such a television game sometimes are rather valuable. Therefore, there is a demand from the TV broadcasting stations for being in the position to offer attractive games in order to gain a high publicity and quota.

On the other hand, there is a demand from end user watching and participating in such television games to have good chances of success although the manual skills of the player might not be sufficient to operate the keypad of a telephone apparatus in a sufficiently fast manner. Due to the fact that the player has to carefully watch the progress of the game on the television screen, it can sometimes be very difficult to quickly find the correct key or button of the keypad of the telephone apparatus to effect the required user command necessary for causing the desire action in the television game. Similarly, in the field of teleshopping, end users sometime have problems in navigating through the choices offered in menues on the television screen and to make the desired selection correctly.

It is therefore a primary object of the invention to provide a telecommunications end user device allowing a user-friendly input of user commands at low cost.

To this end, a telecommunications end user device according to the present invention is provided, comprising a voice input device and a voice output device, a processing and interface device adapted to be connected to a telecommunications network, connected to said voice input device to receive voice signals from said voice input device and to send output signals representative for said voice signals to said telecommunications network, and connected to said voice output device to output voice signals representative for input signals from said telecommunications network; a keypad device to input electrical signals representative for alphanumerical data into said processing and interface device, said processing and interface device being adapted to convert said electrical signals into tone signals having frequencies representative for the alphanumerical values, respectively, and wherein an input device for user commands to be entered into the telecommunications end user device to transmitted through said telecommunications network is provided.

According to one preferred embodiment of the invention, the input device for user commands is formed by a switch device comprising a direction sensitive switch and/or at least one function command switch. Preferably, the direction sensitive switch device is formed by a cross switch having four switch elements connected in parallel to predetermined switch elements of the keypad device. Thus, four user commands (up, down, left and right) can be entered by shifting a joystick-like control element into the respective directions. With the switch elements of the joystick-operated cross switch being connected in parallel to predetermined switch elements of the keypad device, the user can effect user commands that are identical to user commands being caused by depressing the respective predetermined switch elements of the keypad device. Thus, compatability with users that enter the commands through the keypad of the telephone apparatus is provided. In addition to the direction sensitive switch device, additional function command switches (e.g. cancel and enter) can be provided.

Rather than having a physical parallel connection between the switch elements of the direction sensitive switch device and predetermined switch elements of the keypad device, the switch elements of the direction sensitive switch device can be connected to the processing and interface device through separate inputs. Thus, the correlation between the respective user commands (e.g. up, down, left and right) and the respective switch elements of the keypad device (e.g. keys 2, 8, 4, and 6) can be changed and defined deliberately in a programming sequence. This programming sequence can comprise the steps of activating the respective key of the keypad device while at the same time moving the joystick into the desired direction and holding it there for a predetermined period of time. This procedure is repeated for all four directions.

In order to facilitate the use of the telecommunications end user device according to the present invention, the processing and interfacing device is adapted to generate a sequence of tone signals in dependence of a time duration a respective one of said switch elements of the direction sensitive switch is activated. Thus, the respective tone signal corresponding to the desired user command is generated as long as the joystick of the direction sensitive switch device is moved into and held in the respective direction. The repetition rate can also be defined by the user during a programming sequence of the telephone apparatus.

According to a second embodiment of the present invention, said input device for user commands is the voice input device. Voice signals spoken into said input device are processed by a voice recognition device connected to said voice input device. The voice recognition device generates electrical signals to be transmitted through said telecommunications network in response to the spoken user commands. This embodiment has the advantage of not requiring a manually operable joystick. Instead, the spoken user commands are converted by a voice recognition device into tone signals that correspond to predefined keys of the keypad of the telephone apparatus. Again, commands spoken by the user ("up", "down", "left", "right") are identified and DTMF signals corresponding to the tones resulting from a depression of the respective keys (e.g. 2, 8, 4 and 6) are generated. In the same way, the user can also define other words to effect further commands "stop", "go", "yes", "no" or the like.

In order to be independent from the language the user is speaking, the voice recognition device is provided with a memory device for storing characteristics of a predetermined number of spoken user commands and for storing characteristics of the electrical signals corresponding to the respective spoken user commands. Thus, the user can "teach" the voice recognition device the words used and the respective correlated keys.

In order to generate the respective DTMF signals, the voice recognition device is provided with a frequency generator device to generate different frequency signals in response to the respective different spoken user commands recognized by said voice recognition device.

The different frequency signals generated by the frequency generator device correspond to tone signals having frequencies representative for predetermined alphanumerical values of the keypad device.

A correlation between the different frequencies signals generated by the frequency generator device and the respective tone signals is defined during a teaching mode of the voice recognition device, wherein a user
- depresses a specific key of the keypad device resulting in a specific electrical signal sent to the processing and interface device,
- speaks a respective user demand in natural voice via said voice input device into said voice recognition device and,
- the voice recognition device processes the spoken user command, determines the characteristics of the spoken user command, and stores such characteristics into said memory device together with information regarding the respective depressed specific key of the keypad device.

During a confirmation mode of the voice recognition device a user
- speaks the respective command in natural voice via said voice input device into said recognition device, and
- the voice recognition device generates a confirmation signal corresponding to the respective key of the keypad device.

In one embodiment, the confirmation signal is a synthesized voice representation of the alphanumerical value corresponding to the respective key of the keypad device outputted via the voice output means.

In a further embodiment, said confirmation signal is outputted via an alphanumerical display device provided at the telecommunications end user device.

Further features, characteristics and advantages of the telecommunications end user device according to the present invention will become apparent to a person skilled in the art from the following description of presently preferred embodiments of the invention, wherein
- fig. 1: shows a telecommunications end user device having a cross-switch with a joystick and two function command switches,
- fig. 2: is a schematic diagramm of the circuitry provided in the telecommunications end user device of fig. 1,
- fig. 3: shows a second embodiment of the telecommunications end user device, and
- fig. 4: is a schematic diagramm of the circuitry of the telecommunications end user device according to fig. 3.

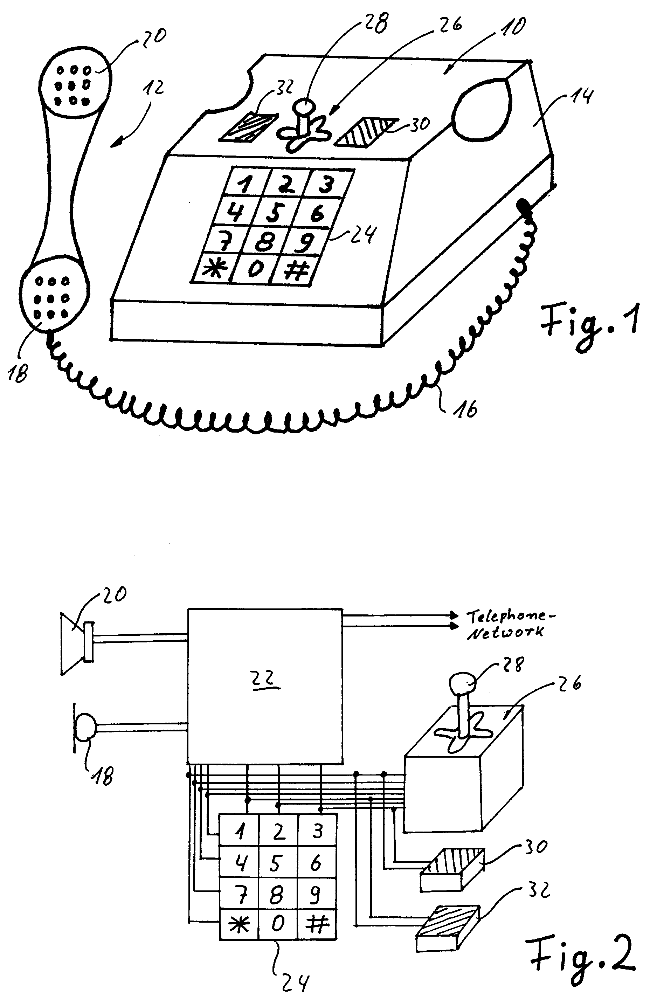

In fig. 1, a telecommunications end user device 10 in the form of a telephone apparatus is shown. This telephone apparatus comprises a hand set 12 connected to a main body 14 of the telephone apparatus 10 through a flexible cord 16. The hand set 12 has a voice input device in the form of a microphone 18 and a voice output device in the form of a loudspeaker 20. The telephone apparatus comprises a processing and interface device 22 (see fig. 2) which is adapted to be connected to a telephone network. The processing and interface device is connected to the microphone 18 to receive voice signals representing human voice spoken into the microphone 18 and to send output signals representative for such voice signals to the telephone network. Further, the processing and interface device 22 is connected to the loudspeaker 20 to output voice signals representative for input signals received from the telephone network.

The processing and interface device 22 is connected to a keypad device 24 having 12 keys or push buttons arranged in a 3x4 matrix. Each key has an alphanumerical value (1, 2, 3, 4, 5, 6, 7, 8, 9, *, 0, #). The processing and interface device 22 comprises circuitry to convert electrical signals coming from the keypad device 24 into tone signals having frequency signals representative alphanumerical values. The frequencies representative for the alphanumerical values are standardized.

The telephone apparatus 10 further is provided with an input device 26 for user commands to be entered into the telephone apparatus in order to be transmitted through the telephone network. In the embodiment shown in figs. 1, 2 the input device 26 is formed by a cross switch device having four switch elements representing four directions (up, down, left and right). The switch elements of the cross switch 26 are connected in parallel to predetermined switch elements of the keypad device 24. The cross switch 28 is provided with a joystick 28 to facilitate the operation of the cross switch 26 during the use of the telephone apparatus 10.

The processing and interface device 22 is provided with circuitry to generate a sequence of tone signals depending on the time duration a respective one of the switch elements of the cross switch 26 is activated. Thus, a user does not have to toggle the joystick 28 of the cross switch 26 in order to generate a sequence of tone signals representing a repetitive actuation in a specific direction. Rather, the joystick 28 can be held for the desired period of time in an actuated position (e.g. up) while the processing and interface device 22 generates a number of identical tone signals as long as the respective switch element in the cross switch device 26 is activated.

In addition to the cross switch device 26, function keys 30, 32 are also connected in parallel to different keys of the keypad device 24. Again, the processing and interface device 22 is capable of producing a sequence of identical tone signals as long as one the function keys 30, 32 is held depressed.

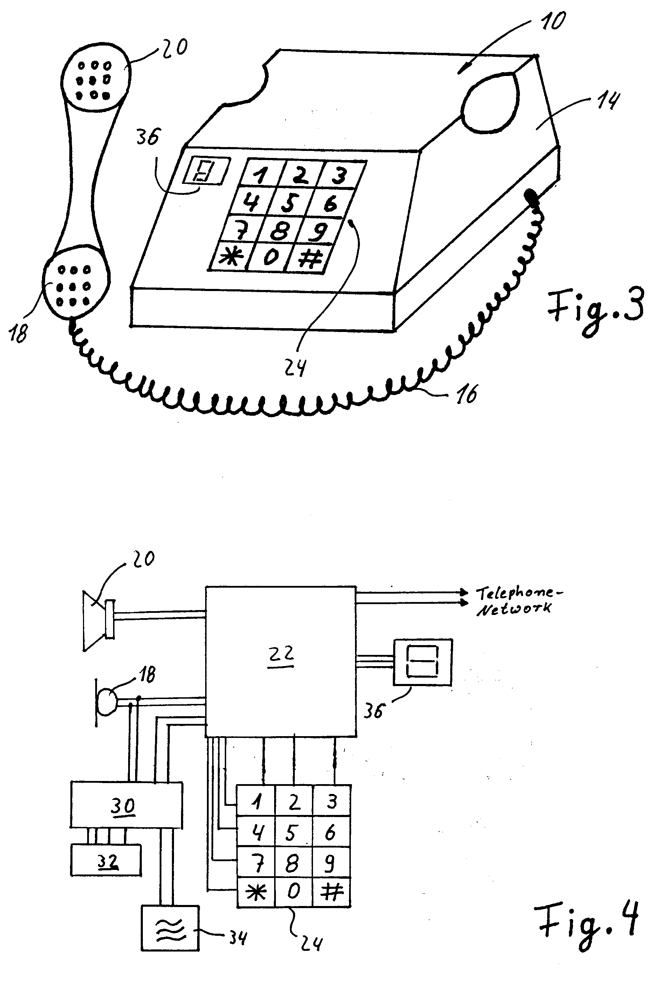

The second embodiment of the telecommunications end user device according to the present invention shown in figs. 3, 4 differs from the first embodiment shown in figs. 1, 2 in so far, as the input device for user commands is the voice input device 18.

Human voice signals spoken into the voice input device 18 are processed by a voice recognition device 30 which is connected to the voice input device 18 and to the processing and interface device 22. The voice recognition device 30 generates electrical signals to be transmitted through the telephone network in response to the spoken user commands.

The voice recognition device 30 is provided with a memory device 32 for storing characteristics of a predetermined number of spoken user demands and for storing characteristics of the electrical signals corresponding to the respective user commands. The voice recognition device 30 is provided with a frequency generator 34 to generate different frequency signals in response to the respective different spoken user commands recognized by the voice recognition device 30. The frequency signals generated by the frequency generator device 34 correspond to tone signals having frequencies representative for predetermined alphanumerical values of the keypad device 24.

During a teaching mode of the voice recognition device 34, a user repeatedly speaks commands (e.g. "up", "down", "left" or "right") into the microphone 18 while at the same time depressing a specific key of the keypad device 24. The voice recognition device 30 processes the spoken user command and determines the characteristics of this specific spoken user command while the processing and interface device 22 determines the respective depressed key of the keypad device 24. Subsequently, the characteristics of the spoken user command and the information regarding the respective depressed specific key of the keypad device 24 are stored in the memory device 32. This teaching mode is repeated for all user commands a user wishes to define.

During a confirmation mode a user speaks the respective command in natural voice into the microphone 18. The voice recognition device connected to the microphone 18 generates a confirmation signal corresponding to the respective command and to the respective key of the keypad device. This confirmation signal can either be a synthesized voice representation of the alphanumerical value of the respective key of the keypad device 24. Alternatively the confirmation signal can be a character representing the respective key of the keypad device displayed on an alphanumerical display 36 provided at the main body 12 of the telephone apparatus 10.

From the above description of the presently preferred embodiments of the present invention, persons skilled in the art will readily recognize various alterations and modifications that are possible without departing from the scope of the present invention defined by the accompanying claims.

For example, the present invention is also particularly useful in connection with multimedia applications. This means, that a user can interactively participate in multimedia applications by sending commands generated by the use of the end user device according to the present invention instead of the key board of a personal computer.

## Claims

1. Telecommunications end user device (10) comprising:
- a voice input device (18) and a voice output device (20);
- a processing and interface device (22)
-- adapted to be connected to a telecommunications network,
-- connected to said voice input device (18) to receive voice signals from said voice input device (18) and to send output signals representative for said voice signals to said telecommunications network, and
-- connected to said voice output device (20) to output voice signals representative for input signals from said telecommunications network;
- a keypad device (24) to input electrical signals representative for alphanumerical data into said processing and interface device (22), said processing and interface device (22) being adapted to convert said electrical signals into tone signals having frequencies representative for the alphanumerical values, respectively, and
- wherein an input device (26, '8) for user commands to be entered into the telecommunications end user device (10) to transmitted through said telecommunications network is provided.

2. Telecommunications end user device (10) according to claim 1, wherein said input device for user commands is formed by a switch device (26) comprising a direction sensitive switch and/or at least one function command switch (30, 32).

3. Telecommunications end user device (10) according to claims 1 or 2, wherein said direction sensitive switch device is formed by a cross switch (26) having switch elements connected in parallel to predetermined switch elements of said keypad device (24).

4. Telecommunications end user device (10) according to any of claims 1 to 3, wherein said processing and interface device (22) is adapted to generate a sequence of tone signals in dependence of a time duration a respective one of said switch elements of said direction sensitive switch device (26) being activated.

5. Telecommunications end user device (10) according to claim 1, wherein
- said input device for user commands is the voice input device (18), and wherein voice signals corresponding to spoken user commands spoken into said voice input device (18) are processed by a voice recognition device (30) connected to said voice input device, and wherein said voice recognition device generates electrical signals to be transmitted through said telecommunications network in response to the spoken user commands.

6. Telecommunications end user device (10) according to claim 5, wherein said voice recognition device (30) is provided with a memory device (32) for storing characteristics of a predetermined number of spoken user commands and for storing characteristics of the electrical signals corresponding to the respective spoken user commands.

7. Telecommunications end user device (10) according to claim 6, wherein said voice recognition device is provided with a frequency generator (34) device to generate different frequency signals in response to the respective different spoken user commands recognized by said voice recognition device (30).

8. Telecommunications end user device (10) according to claim 7, wherein
- said different frequency signals generated by said frequency generator device (34) correspond to tone signals having frequencies representative for predetermined alphanumerical values of the keypad device (24).

9. Telecommunications end user device (10) according to claim 8, wherein
- a correlation between the different frequencies signals generated by the frequency generator device and the respective tone signals is determined during a teaching mode of the voice recognition device (34), wherein a user
- depresses a specific key of the keypad device (24) resulting in a specific electrical signal sent to the processing and interface device,
- speaks a respective user demand in natural voice via said voice input device into said voice recognition device and,
- the voice recognition device (30) processes the spoken user command, determines the characteristics of the spoken user command, and safes such characteristics into said memory device (32) together with information regarding the respective depressed specific key of the keypad device (24).

10. Telecommunications end user device (10) according to claim 9, wherein during a confirmation mode a user
- speaks the respective command in natural voice via said voice input device into said recognition device, and
- the voice recognition device (30) generates a confirmation signal corresponding to the respective key of the keypad device (24).

11. Telecommunications end user device (10) according to claim 10, wherein
- the confirmation signal is a syntesized voice representation of the alphanumerical value corresponding to the respective key of the keypad device (24) outputted via the voice output means (20).

12. Telecommunications end user device (10) according to claim 10, wherein said confirmation signal is an alphanumerical character outputted via an alphanumerical display device (36).
